# EUROPEAN PATENT SPECIFICATION

(11) **EP 3 059 104 B1**
(45) Date of publication and mention of the grant of the patent: **22.08.2018**
(21) Application number: 16156374.7
(22) Date of filing: 18.02.2016
(51) Int. Cl.: B60G 99/00, F16F 9/34, F16F 9/516, F16F 9/06

(54) **A HYDRAULIC CYLINDER ARRANGEMENT, SUSPENSION ARRANGEMENT AS WELL AS CONTROL ARRANGEMENT FOR IMPACT, NOICE AND VIBRATION ABSORBING SUSPENSION OF AN OPERATOR CAB**
HYDRAULISCHE ZYLINDERANORDNUNG, AUFHÄNGUNGSANORDNUNG SOWIE STEUERANORDNUNG FÜR DIE AUFPRALL-, GERÄUSCH- UND SCHWINGUNGSDÄMPFENDE LAGERUNG EINER FAHRERKABINE
SYSTÈME DE VÉRIN HYDRAULIQUE, AGENCEMENT DE SUSPENSION AINSI QUE DISPOSITIF DE COMMANDE POUR UN IMPACT, SUSPENSION AMORTISSANT LES VIBRATIONS ET LE BRUIT D'UNE CABINE D'OPÉRATEUR

(30) Priority: 18.02.2015 SE 1500097
(43) Date of publication of application: 24.08.2016
(73) Proprietor: Eco Log Sweden AB, 826 22 Söderhamn (SE)
(72) Inventor: NILSSON, Johan, 826 22 SÖDERHAMN (SE); ARVIDSSON, Hans, 770 13 GRANGÄRDE (SE)
(74) Representative: AWA Sweden AB

(56) References cited:
- US-A- 6 029 764
- US-A1- 2001 022 251
- US-A1- 2005 051 373
- US-A1- 2005 082 127
- US-A1- 2014 190 156
- US-B1- 6 273 203
- US-B2- 8 240 646

## Description

The present invention relates to a hydraulic cylinder device to be used at a suspension arrangement for shock, noise and vibration damping suspension of an operator cab on a frame of a working machine, comprising a hydraulic cylinder having a cylinder body having an inner cylinder space, a piston which is displaceably movable in the cylinder, a piston rod which in an inner end is connected to the piston and extends through and is displaceable to and fro through a piston rod bore in an end of the cylinder body, wherein the piston delimits two hydraulic fluid chambers having variable volumes and more precisely a first hydraulic fluid chamber on the side of the piston which is facing away from the piston rod, as well as a second hydraulic fluid chamber on the piston rod side of the piston, hydraulic fluid passages through the cylinder body to the first as well as the second hydraulic fluid chamber for feeding of hydraulic fluid via hydraulic lines to and from the respective hydraulic fluid chamber, as well as an at least partly gas filled accumulator which is in hydraulic fluid communication with the first hydraulic fluid chamber.

The invention also relates to a suspension arrangement for shock, noise and vibration damping suspension of an operator cab on a frame of a working machine, comprising at least three hydraulic cylinder devices as mentioned above.

Furthermore, the invention relates to a regulating device for shock, noise and vibration damping suspension arrangement for an operator cab, wherein the suspension arrangement comprises at least three hydraulic cylinder devices as mentioned above, which support the operator cab on a frame of a working machine.

### Background of the invention

For working vehicles, such as trucks, tractors, forest machines, excavating machines and the like, it is important that the operator cab is mounted on the frame of the vehicle in a way such that shocks, noise and vibrations to an as large extent as possible can be prevented from being transmitted from the motor and working equipment of the vehicle through the chassis or the frame to the operator in the cab. Many operators spend the whole of their working days in the cab and it is therefore important that the working environment in the cab becomes as quiet, shock and vibration free as possible in order to avoid long term job related injuries in form of impaired hearing and vibration injuries in e.g. the back and the hands.

In order to provide an as quiet and shock and vibration free environment as possible for the operator of such vehicles it is prior known to arrange some form of spring suspension and damping between the operator cab and the frame. This may comprise e.g. coil springs of steel, rubber isolators of solid rubber/plastics, so called hydro bushings which are a combination of rubber/plastics and contained damping fluid but may also consist of pneumatic or hydraulic springs, for example a hydraulic cylinder in combination with a gas-filled accumulator as is disclosed in e.g. US 8240646.

A common characteristic of these prior art cab suspensions is that they can support the cab in the vertical direction but cannot stabilize the cab in the horizontal direction for all of the conceivable forces which the cab can be exposed to. Instead, this horizontal stabilization must be provided for by means of some additional mechanism or device. For this purpose substantially horizontally extended lever arms are often utilized between the cab and the frame, and to stabilize the cab in the longitudinal direction of the vehicle as well as in the lateral direction there must be provided at least two such lever arms in an angle, preferably orthogonally in relation to each other. A great disadvantage with such lever arms is that by this it is created a rigid, undampened connection between the cab and the frame which can transmit noise and vibrations. Moreover, by this the cab suspension tends to become relatively complicated with many incorporated components, which give high costs, for both material and mounting, high weight and a large space requirement.

From US 2005/0082127 it is previously known a suspension system for an operator cab, comprising two hydraulic cylinders whose respective cylinder's piston side or plus side is connected with a respective accumulator. The piston of each respective cylinder comprises three fluid connections coupled in parallel, of which one consists of a throttle, one of a one-way valve which allows hydraulic flow from the plus side to the minus side or the piston rod side, as well as of a pressure relief valve which allows hydraulic flow from the minus side to the plus side when the pressure on the minus side is sufficient larger than on the plus side. The system also comprises a displacement sensor, two accelerometers and a motion sensor, which by means of a microcomputer control a levelling valve and two control valves in order to regulate the cab into an as horizontal position as possible when driving on an uneven ground. One disadvantage with such a suspension system is that it presents a large inertia. The reason for this is that the displacement sensor, the accelerometer and the motion sensor initially must detect a change of position of the cab, thereupon the microcomputer have to process the signals from the sensors and the meters and give signals to the levelling valve and the control valves to compensate for the change of position by pumping in or out hydraulic fluid to or from the plus side of the respective hydraulic cylinders. Accordingly, there will be a relatively large time delay between detected change of position and the thereupon following compensated actuation of the hydraulic cylinders which has to result that the system will not be able to parry for irregularities in the ground sufficient quickly. Such a suspension system will also become complicated and by that costly to manufacture and install and besides, the resilient effect of the hydraulic cylinders will be very poor or non-existent.

US2014/0190156 discloses all the features according to the preamble of claim

### 1. Summary of the invention

It is an object of the present invention to provide a hydraulic cylinder device which gives an effective shock, noise and vibration damping. At least this first object is achieved by a hydraulic cylinder device according to claim 1.

The invention also relates to a suspension arrangement comprising at least three hydraulic cylinder devices according to claim 1 for effective shock, noise and vibration damping suspension of an operator cab which has a simple structure with few incorporated parts which makes it cost saving, space saving and weight saving. At least this second object is achieved by a suspension arrangement according to claim 5.

The invention also relates to a regulating device for controlling of the function of a suspension arrangement of an operator cab comprising three or more hydraulic cylinder devices according to claim 1, which allows a simple structure of the suspension arrangement as well as good damping characteristics for shocks, noise as well as vibrations also when driving on a sloping ground. At least this third object is achieved by a regulating device according to claim 7.

Accordingly, the basis of the invention lies in the insight that the first object may be achieved by a hydraulic cylinder device which is provided with an at least partly gas filled accumulator which is in hydraulic fluid communication with a first hydraulic fluid chamber which is positioned on the piston rod free side of the piston. The first hydraulic fluid chamber and the accumulator are connected through a first throttle and a first one-way valve, which are coupled in parallel and of which the first one-way valve allows hydraulic flow in the direction from the first hydraulic fluid chamber but blocks hydraulic flow in the opposite direction. Moreover, the piston is provided with two through flow passages, which connects the two hydraulic fluid chambers, wherein one through flow passage forms a second throttle while the other is a second one-way valve which allows hydraulic flow from the first hydraulic fluid chamber to a second hydraulic fluid chamber on the piston rod side of the piston. Additionally, a throttle is arranged in the hydraulic fluid line which extends from the second hydraulic fluid chamber on the piston rod side. The above mentioned arrangement of throttles and one-way valves are done to compensate for the unbalance which appears as a result of the different areas on the piston rod side and the opposed piston rod free side of the piston and which result in a large different of the amount of hydraulic fluid which move in to and out from the first and the second hydraulic fluid chambers, respectively, when the piston moves in the cylinder space. By this compensation considerably improved damping characteristics can be achieved of the hydraulic cylinder device. This unbalance is particularly noticeable at a suspension arrangement according to claim 5 which, as a result of that only the hydraulic cylinders take up the vertically as well as the horizontally forces which acts on the operator cab, has to be provided with extra robust hydraulic cylinders having thick piston rods in order to withstand all of the forces acting on the operator cab. In this connection it is not only the forces acting on the operator cab during normal operating conditions that has to be considered. There are for example regulations for workers protection which demands that the suspension arrangement should withstand in case the machine would turn over without that the operator cab being disengaged. However, it is to be understood that the hydraulic cylinder according to the invention is not restricted to be used solely in connection with a suspension arrangement according to claim 5 or a regulating device according to claim 7.

In the hereinafter described and illustrated exemplary embodiment the hydraulic cylinder device is assembled into one unit. However, it should be understood that the incorporated parts of the hydraulic cylinder device could be separately mounted on the vehicle and all of or some of the throttles and one-way valves could for example be mounted in hydraulic fluid lines connecting the different parts of the hydraulic cylinder device with each other.

The second object is achieved by a suspension arrangement which is capable of supporting the operator cab on at least three, preferably four double-acting hydraulic cylinder devices, which each is provided with an at least partly gas-filled accumulator which is in hydraulic fluid communication with a first hydraulic fluid chamber which is positioned on the piston rod free side of the piston. Additionally, the operator cab is supported solely by the hydraulic cylinders, in vertical as well as in horizontal direction, by way of that each hydraulic cylinder being fixedly connected, i.e. non-articulated, via the cylinder body or the piston rod with the working machine frame or the operator cab and is articulated connected, via the other of the cylinder body or the piston rod, with the other of the frame or the operator cab. In the hereinafter illustrated exemplary embodiment the respective hydraulic cylinder is fixedly connected with the frame in its outer end of the hydraulic cylinder via a bolt connection while the piston rod is articulated connected to the lower side of the operator cab but this could accordingly be made in many other ways.

The third object can be achieved by a regulating device according to an embodiment that will be closer described in the following detailed description.

In the present description and the following claims the term "throttle" is intended to define a through flow passage having a through flow area which is considerably smaller than the through flow areas normally used in hydraulic lines for hydraulic cylinders. In the exemplary embodiment described hereinafter the inner diameter of the hydraulic lines which lead to and from the hydraulic cylinders amount in praxis to about 9 mm while the diameter of the through flow apertures of the throttles amount to between about 0,5 to 2 mm.

Furthermore it is specified in the description that the piston of the hydraulic cylinder in a neutral operating condition bears with a low pressure against the spring element. This low pressure may in praxis amount to 0-10 bar, preferably 1-7 bar and most preferred to 2-5 bar.

### Brief description of the drawings

An exemplary embodiment of the invention will hereinafter be described with reference to the drawings, in which are shown in:
- Fig 1: a side view of the front part of a forest machine comprising an operator cab;
- Fig 2: an exploded perspective view of a hydraulic cylinder according to an embodiment of the invention;
- Fig 3: a side view of the hydraulic cylinder in an assembled state;
- Fig 4: a partly cut through view of an accumulator along the line IV-IV in Fig 3;
- Fig 5: a cut out and schematic perspective view of a suspension arrangement according to the invention;
- Fig 6: a schematic and simplified circuit diagram of a hydraulic system and a hydraulic cylinder;
- Fig 7a-7b: a longitudinal cross section through a hydraulic cylinder having the piston in two different positions;
- Fig 8: a hydraulic circuit diagram of which a part relate to a regulating device for automatic regulating of the positions of several hydraulic cylinders in a suspension arrangement; and
- Fig 9-11: schematic graphs illustrating the calculation of parameters for regulating the hydraulic cylinders.

### Detailed description of an embodiment of the invention

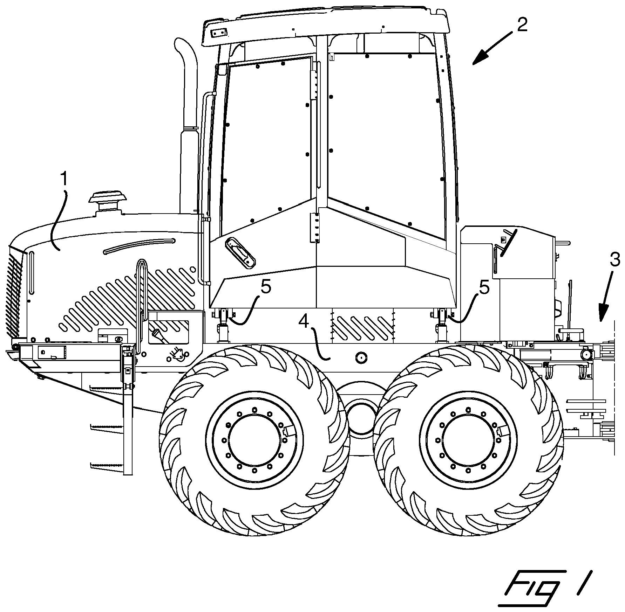

In Fig 1 is shown a front part of a wood transporting forest machine, a so called forwarder, which is provided with a motor compartment 1 for a diesel engine and an operator cab 2 and is via a frame hinge 3 connected with a not shown load carrying carriage, which carries a crane and a load carrier, e.g. in form of horizontal load crossbeams and vertically standing load beams, on which trunk parts are loaded for transportation out from the forest. During operation of such a machine, during transportation of stem parts as well as during loading and unloading, the machine is exposed to shocks, at driving on uneven ground and at operating of the crane, as well as vibrations and noise from the motor and drive shafts. In most cases such machines lack any springs and damping between the wheel suspension and the frame 4 in order to give an as good stability as possible during driving under difficult conditions. In order to protect the operator of the machine from shocks, vibrations and high noise levels as a result of vibrations propagating via the frame and the framework of the operator cab, the illustrated operator cab is resilient suspended via four double-acting hydraulic cylinders 5 according to the invention, one hydraulic cylinder below each corner of the operator cab, but is in all other respects totally separated from the frame and other rigid parts of the machine.

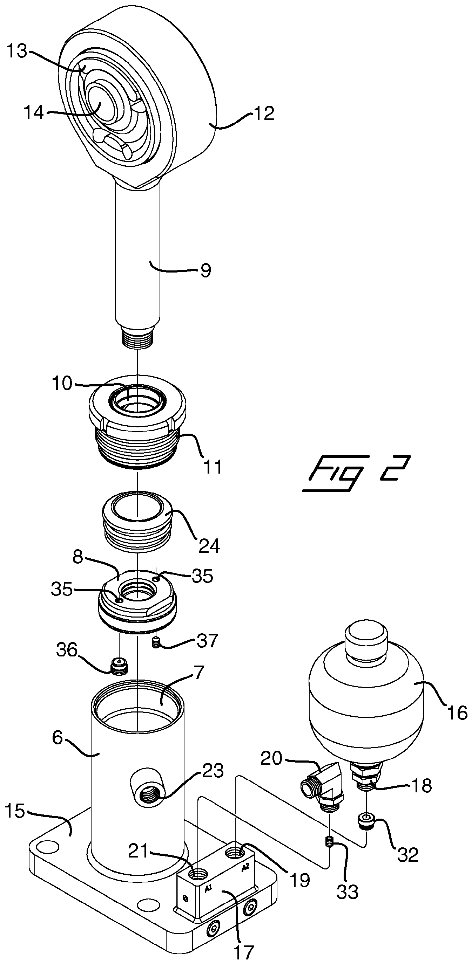

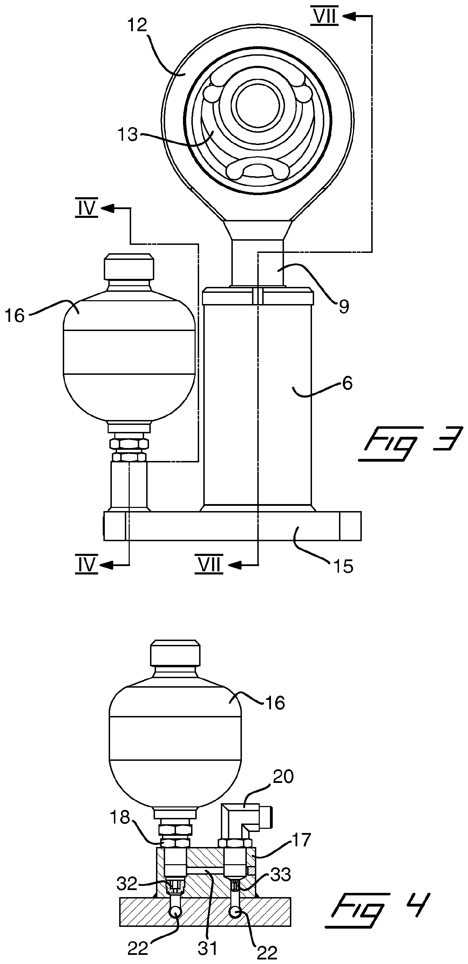

Then reference is made to Figs 2-4 which show an embodiment of a hydraulic cylinder 5 according to the invention. More precisely, Fig 2 illustrates the hydraulic cylinder in a exploded perspective view of the constituent parts of the hydraulic cylinder, Fig 3 is a side view and Fig 4 is a partly cut through view of the accumulator along the line IV-IV in Fig 3.

The hydraulic cylinder comprises a cylinder body 6 having an inner cylinder space 7, a displaceable piston 8 in the cylinder and a piston rod 9 which in an inner end is threaded connected to the piston and extends and is displaceable to and fro through a piston rod bore 10 in an end cap 11 which is threaded connected to an end of the cylinder body. The outer end of the piston rod 9 is provided with a fastening ring 12 in which a resilient rubber bushing 13 is mounted which has an eccentric positioned metal sleeve 14 having a through hole through which a not in detail shown rod formed attachment on the lower side of the operator cab 2 is adapted to be inserted for articulated connection between the hydraulic cylinder 5 and the operator cab. The cylinder body 6 is welded connected to a mounting plate 15 which is provided with through holes for bolts in order to allow making a fixed connection to the frame 4 of the working machine. An accumulator 16 in form of a dome-shaped container is mounted on a mounting head 17 in an end of the mounting plate. The accumulator is internally provided with a membrane or bladder in order to define a gas-filled space within the same. Via a threaded conduit sleeve 18 the accumulator is mounted in a first threaded hole 19 in the mounting head and is in hydraulic fluid communication with the cylinder space of the hydraulic cylinder. A conduit connection 20 is connected to a second threaded hole 21 in the mounting head in order to allow connection of the hydraulic cylinder to the hydraulic system of the working machine and via passages 22 in the mounting head the accumulator and the conduit connection 20 are in hydraulic fluid communication with the lower part of the cylinder space. As is evident from Fig 2 the hydraulic cylinder is also provided with a conduit connection 23 on the envelope surface of the cylinder body for connection of the upper part of the cylinder space to the hydraulic system of the working machine. In the cylinder space of the hydraulic cylinder a spring element 24 in form of a resilient sleeve of plastics or rubber is arranged in the upper part around the piston rod. In the piston of the hydraulic cylinder two through flow passages are formed in which a one-way valve and a throttle are mounted whose function will be described more closely below.

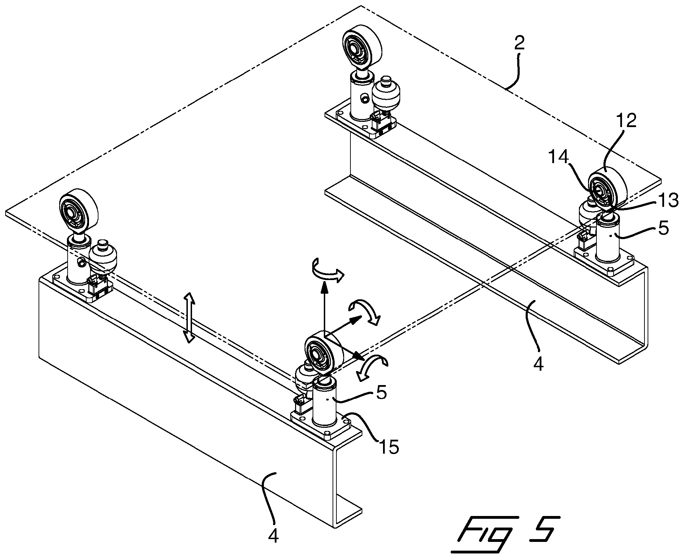

The resilient and damping connection between the frame and the operator cab of the working machine is schematically illustrated in Fig 5 in which is shown a perspective view of two cut off frame parts 4 of the working machine in which four hydraulic cylinders 5 according to the invention are fixedly mounted via bolt connections through the mounting plates 15. Via the fastening rings 12 of the piston rods and the in these mounted rubber bushings and the metal sleeves 14, the lower side of the operator cab, which is schematically illustrated as a plate 2, is articulated connected to the hydraulic cylinders.

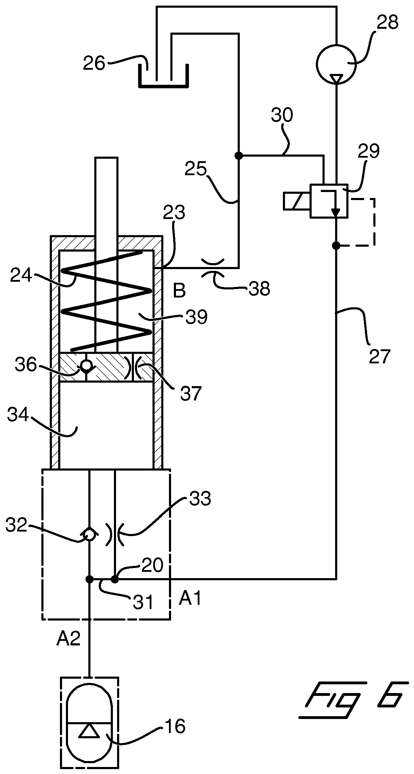

Then reference is made, besides to Figs 2 and 4, also to Fig 6 for a closer description of the design of the hydraulic cylinder according to the invention and its hydraulic circuit. Fig 6 is a schematic and simplified circuit diagram for the hydraulically connection of the hydraulic cylinder 5 to the hydraulic system of the working machine. As is seen, the conduit connection 23 on the envelope surface of the cylinder body is connected, via a first hydraulic line 25, to a supply tank 26 for hydraulic fluid. A second hydraulic line 27 extends from the supply tank via a hydraulic pump 28 and a pressure reducing valve 29 to the conduit connection 20 on the mounting head. The pressure reducing valve 29 is connected via a connection line 30 to the first hydraulic line 25. As is seen, the accumulator, which also is mounted on the mounting head, is hydraulically connected to the conduit connection 20 via a connection passage 31. In Fig 6 is schematically shown a first one-way valve 32 and a first throttle 33, which are coupled in parallel and connect the accumulator 16 and the conduit connection 20 for the second hydraulic line 27 to a first hydraulic fluid chamber 34 on the side of the piston which is facing away from the piston rod, also called the plus-side. This first one-way valve 32 is directed such that it allows hydraulic fluid to pass through in the direction from the hydraulic fluid chamber towards the accumulator and the second hydraulic line but blocks flow in the opposite direction. The connection passage 31, the first one-way valve 32 and the first throttle 33 are also visible in the partly cut through view in Fig 4. Through the piston are, as already mentioned, two through flow passages 35 formed in which on one hand a second one-way valve 36 and on the other a second throttle 37 are mounted, as is also seen in Fig 2. The one-way valve 36 is directed such that it allows hydraulic fluid in the direction from the plus-side of the piston to its piston rod side or minus-side but blocks hydraulic flow in the opposite direction. Moreover, a third throttle 38 is mounted in the first hydraulic line 25.

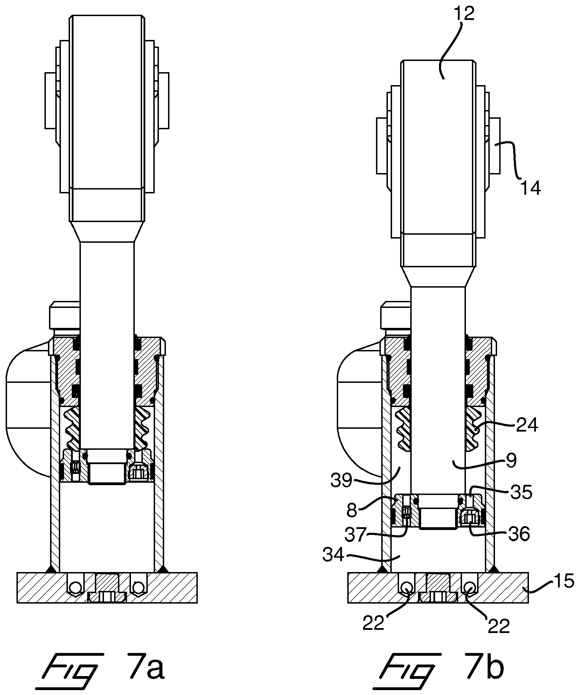

Referring to Figs 6 and 7a, 7b in combination, the function of the hydraulic cylinder will be described more in detail hereinafter. In a neutral position during driving, the piston and the piston rod are extended such that the upper side of the piston bears against the spring element 24 with a small pressure, as is illustrated in Fig 7a. In this position hydraulic fluid is pumped from the supply tank 26 via the pump 28 to the pressure reducing valve 29. Since the through flow through the hydraulic cylinder is very small the pressure reducing valve will maintain a constant pressure (which in the exemplary embodiment is electrically variable) in the line 27. A small flow runs the whole time via the pressure reducing valve to the conduit connection 20, the first throttle 33, through the first hydraulic fluid chamber 34, through the second throttle 37 in the piston, through the second hydraulic fluid chamber 39, the third throttle 38 and furthermore back to the supply tank 26 via the first hydraulic line 25. By designing the throttles such that the flow passage area of the first throttle is larger than the flow passage area of the second throttle 37, which in its turn is larger than the flow passage area of the third throttle 38, essentially the same hydraulic fluid pressure will be adjusted in the first and the second hydraulic fluid chambers when the piston is not moving. As a consequence of the fact that the piston has a larger area on the plus-side than on the minus-side, i.e. on the piston rod side, since the piston rod takes up a certain area, the force acting on the plus-side will be larger than the force acting on the minus-side such that the hydraulic cylinders in a neutral position, when driving on a flat and essentially even ground, will assume the in Fig 7a illustrated position with the piston bearing with a light pressure against the spring element.

In case the working machine run over a bump on the ground or runs down into a pit and lands in the bottom of the pit the lifting force of the piston will be overcome such that the second one-way valve 36 will open when the pressure in the chamber 34 is higher than the pressure in the chamber 39 and allows hydraulic fluid to pass through from the first to the second hydraulic fluid chamber such that the piston and the piston rod will sink down to e.g. the in Fig 7b illustrated position which will give a certain damping of the shock. Moreover, as a result of the raised pressure in the first hydraulic fluid chamber, also the first one-way valve 32 will open and allow hydraulic fluid to pass and also to some extent through the first throttle 33, which will give a pressure increase in the accumulator 16 such that the gas in it will be compressed under additional damping of the generated shock.

After the shock, hydraulic fluid will again be filled into the first hydraulic fluid chamber via the first throttle such that the lifting force on the plus-side of the piston becomes larger than the counter holding force on its minus-side and the piston and the piston rod will slowly rise to the initial position with the piston bearing with a light pressure against the spring element.

By altering the opening areas of the throttles and one-way valves in relation to each other is it possible to adapt the damping and resilient characteristics in relation to different driving conditions and the driver's weight. It would for example be possible to make at least the opening areas of the throttles adjustable in order to optimize the damping and resilient characteristics of the operator cab afterwards.

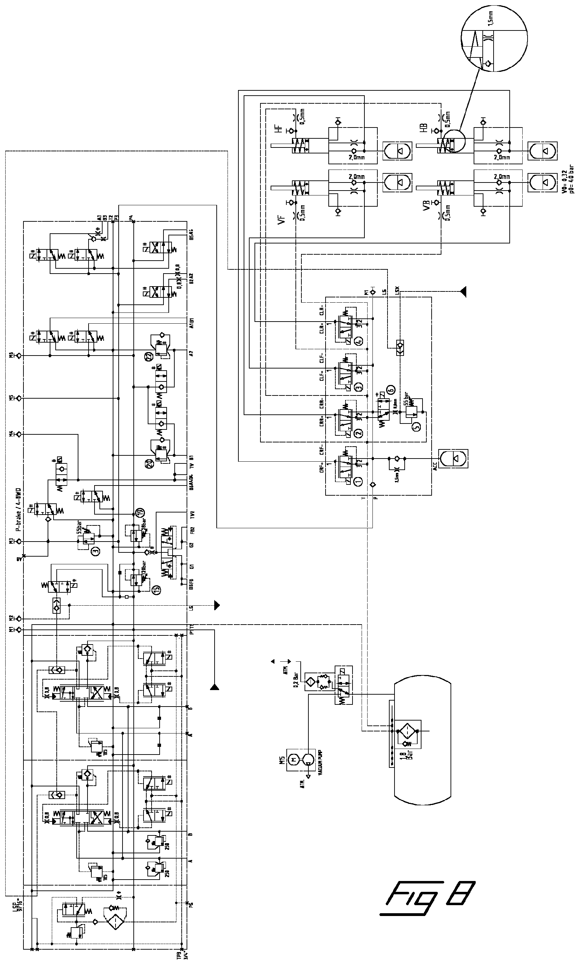

In Fig 8-12 is schematically shown the structure of and is illustrated the function of a regulating device for regulating the hydraulic fluid pressure in the first hydraulic fluid chamber in such a way that each hydraulic cylinder can be maintained in its neutral position or at least so close to that as possible and such that swinging, which can arise due to sudden shocks, can be dampened as quickly as possible. The reason why striving to maintain the hydraulic cylinder in or close to its neutral position is that in this position the operator cab is best shock dampened.

A hydraulic system for regulating the hydraulic cylinders according to the invention is shown in Fig 8 and this comprises a hydraulic pump which pumps out hydraulic fluid with a certain pressure. The hydraulic pressure in each hydraulic cylinder is regulated with a respective actuator valve, which each is fed with hydraulic fluid from the tank. The four hydraulic cylinders, which function as a shock, vibration and noise dampening suspension arrangement, are in the circuit diagram denoted hydraulic cylinder left front LF, left rear LR, right front RF and right rear RR and are each provided with an actuator valve, respectively, which in a common well known way can be placed in three different positions, firstly for feeding hydraulic fluid to the first hydraulic fluid chamber in order to increase the pressure in the same, secondly for feeding hydraulic fluid from the first hydraulic fluid chamber in order to lower the pressure in the same, and thirdly for stopping hydraulic fluid flow to and from the first hydraulic fluid chamber in order to maintain the pressure constant in the same. Each of the actuator valves is also provided with a pressure regulator which has the function of automatically regulate the actuator valve in order to maintain the pressure constant on a preset value, i.e. in case there will arise pressure fluctuations in the system it will regulate the valve to feed in hydraulic fluid into the first hydraulic fluid chamber in case the pressure in the same decreases, while it will drain of hydraulic fluid from the first hydraulic fluid chamber in case the pressure in the same increases. In this way pressure fluctuations in the hydraulic system will automatically be dampened. The setting of the pressure that the pressure regulator shall strive to maintain is effected via electric signals via an incoming line to each of the pressure regulators.

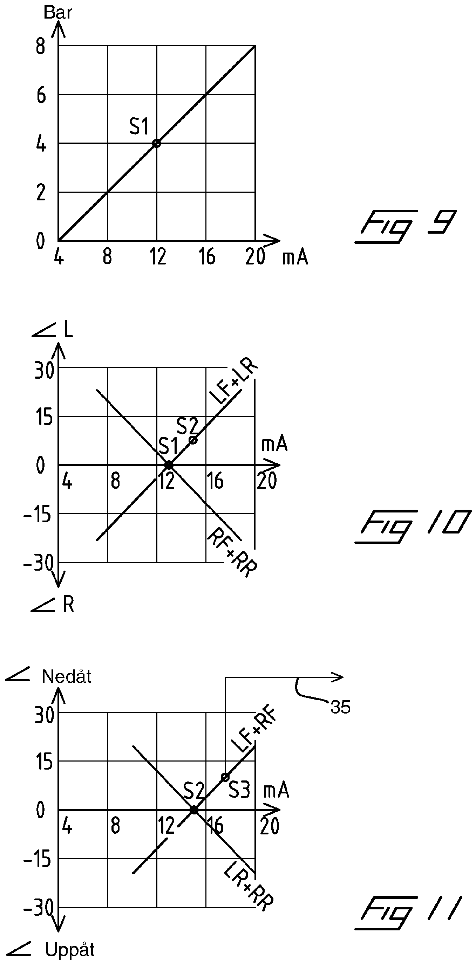

Reference is hereafter made to Figs 9-11 for description of an automatic regulating device according to the invention for individually regulating of the hydraulic pressure in the first hydraulic fluid chambers of the respective hydraulic cylinders being part of a shock, vibration and noise damping suspension arrangement for an operator cab in order to allow automatic compensation of the hydraulic pressure in the hydraulic cylinders as a consequence of varying inclination conditions as the machine is driven in uneven and sloping terrain. In the diagrams according to Figs 9-11 is graphically shown which different settings and automatic regulations of the hydraulic system that is possible to do with the regulating arrangement and in the example below will be described what calculation and regulating steps being performed in order to set a compensated hydraulic pressure in the hydraulic cylinder LF that is positioned beneath the forward left corner of the operator cab. Corresponding procedure steps are accordingly performed simultaneously for each of the hydraulic cylinders.

Fig 9 shows a graph which illustrates the setting of an initial pressure in the first hydraulic fluid chambers of all of the hydraulic cylinders simultaneously. This hydraulic pressure is dependent of the total weight that loads the hydraulic cylinder, i.e. the aggregate weight of the operator cab and the operator. This setting may be performed manually having the machine placed on a plane ground. In the illustrated exemplary embodiment in Fig 13 the initial setting S1 of the hydraulic pressure has been set to 4,5 bar in each hydraulic cylinder which gives an output signal to each pressure regulator of about 13 mA. This setting could however also be performed automatically by some form of lever indicator which detects in which position each hydraulic cylinder is.

Thereafter, a not illustrated weight distribution may also be performed which compensates for the case the operator cab should be unevenly loaded and either be inclined forward or backward. Also this setting may preferably be performed manually and as an aid there could be some form of levelling instrument in the operator cab showing the inclination. If for example the cab is somewhat inclined backwards this can be compensated by increasing the hydraulic pressure in the forward hydraulic cylinders LF and RF and/or a corresponding decreasing is done of the hydraulic pressure in the rear hydraulic cylinders LR and RR. Also this setting could however be performed automatically by means of a level indicator as is described in connection with Fig 9.

When the settings according to Fig 9 and possible inclination correction are made the operator cab is balanced for driving on non-sloping ground. Should any of the wheels of the machine drive over a stone, log, pit or the like, the hydraulic cylinders will dampen the shock which will arise and the pressure regulators will dampen the subsequent self-swinging by that they strive to maintain a constant hydraulic pressure in the first hydraulic fluid chambers.

The regulating device according to the present invention also has a function to compensate for driving in lateral slope in a direction perpendicular in relation to the longitudinal axis of the machine as well as in upward or downward slope in a direction in parallel to the longitudinal axis of the machine. In such cases some of the hydraulic cylinders will be loaded with a larger force than what corresponds of the basic setting according to Fig 9 due to the inclination of the entire machine including the operator cab. With other words, one or a few of the hydraulic cylinders have to bear a larger load while others bear a smaller load than what corresponds to the hydraulic pressure in the respective first hydraulic fluid chamber. In order to avoid that the pistons of the hydraulic cylinders then will be placed in any of the end positions, i.e. that the pistons of the high loaded hydraulic cylinders bear against the bottom of the cylinder space and the pistons of the low loaded hydraulic cylinders bear with high pressure against the spring element with reduced shock, vibration and noise damping as a result, the regulating device will automatically increase the hydraulic pressure in the high loaded hydraulic cylinders and decrease the hydraulic pressure in the low loaded hydraulic cylinders.

In order to achieve this, the machine is provided with a not shown inclinometer, which preferably can be of a type that functions by means of a gyro but also other types of inclinometers could be possible. The inclinometer provides the regulating device with signals which indicate how large the inclination is in a direction perpendicular as well as in parallel to the longitudinal axis of the machine.

Fig 10 is a graph illustrating the compensation of the hydraulic pressure when driving in a lateral slope. In the figure two straight lines are drawn which indicate how much the hydraulic pressure should be increased or decreased in the hydraulic cylinders left forward LF and left rear LR respectively in right forward RF and right rear RR for every inclination change towards left L or right R. The inclination of the straight lines in the graph is predetermined by measuring or calculation. As starting-point in the graph the value S1 from Fig 9 is used, which correspond to 0° inclination and is intersected by both lines. In the example the inclinometer has measured an inclination of about 8° to the left. This value gives an output signal S2 of about 15 mA to the pressure regulators for the hydraulic cylinders left forward LF and left rear LR. Corresponding output signal to the pressure regulators for the hydraulic cylinders right forward RF and right rear RR amounts to about 11 mA (not indicated).

Fig 11 finally illustrates a graph which shows the compensation of the hydraulic pressure in the hydraulic cylinders at driving in downward and upward slope and the two straight lines indicates how much the hydraulic pressure should be increased or decreased in the hydraulic cylinders left forward LF and right forward RF respectively in left rear LR and right rear RR for each inclination change downward or upward. The inclination of the lines in the graph is predetermined by measurement or calculation. As starting-point in the graph the value S2 from Fig 10 is used, which corresponds 0° inclination and is intersected by both lines. In the example the inclinator has measured an inclination of about 8° downwards. This value gives an output-signal S3 of about 17,5 mA to the pressure regulators for the hydraulic cylinders left forward LF and right forward RF. Corresponding output-signal to the pressure regulators for the hydraulic cylinders left rear LR and right rear RR amounts to about 13 mA (not indicated). The output-signal 17,5 mA is accordingly fed to the pressure regulator for the hydraulic cylinder LF which is positioned beneath the forward left corner of the operator cab, wherein the pressure regulator will set the hydraulic pressure in the first hydraulic fluid chamber of this hydraulic cylinder on a level which correspond to this signal strength, i.e. a hydraulic pressure which places the hydraulic cylinder in the neutral position according to Fig 7a.

## Claims

1. A hydraulic cylinder device to be used at a suspension arrangement for shock, noise and vibration damping suspension of an operator cab (2) on a frame of a working machine, comprising a hydraulic cylinder (5) having a cylinder body (6) having an inner cylinder space (7), a piston (8) which is displaceably movable in the cylinder, a piston rod (9) which in an inner end is connected to the piston and extends through and is displaceable to and fro through a piston rod bore (10) in an end of the cylinder body, wherein the piston delimits two hydraulic fluid chambers having variable volumes and more precisely a first hydraulic fluid chamber (34) on the side of the piston which is facing away from the piston rod, as well as a second hydraulic fluid chamber (39) on the piston rod side of the piston, hydraulic fluid passages through the cylinder body to the first as well as the second hydraulic fluid chamber for feeding of hydraulic fluid via hydraulic lines (25, 27) to and from the respective hydraulic fluid chamber, as well as an at least partly gas filled accumulator (16) which is in hydraulic fluid communication with the first hydraulic fluid chamber,
**characterized in that** the first hydraulic fluid chamber (34) and the accumulator (16) are connected via a first throttle (33) and a first one-way valve (32), which are coupled in parallel to each other and of which the first one-way valve allows hydraulic flow from the first hydraulic fluid chamber but blocks hydraulic flow in the opposite direction, **in that** the piston (8) comprises two through flow passages (35) which connect the first and second hydraulic fluid chambers (39) and of which one through flow passage is a second throttle (37) while the second is a second one-way valve (36) which allows hydraulic flow from the first to the second hydraulic fluid chamber but blocks hydraulic flow in the opposite direction, and **in that** the hydraulic fluid passage to and from the second hydraulic fluid chamber comprises a third throttle (38).

2. The hydraulic cylinder device according to claim 1, **characterized** i n that the through flow area of the first throttle is larger than the through flow area of the second throttle, which in its turn is larger than the through flow area of the third throttle.

3. The hydraulic cylinder device according to claim 1 or 2, **characterized in that** the same comprises a spring element in the second hydraulic fluid chamber.

4. The hydraulic cylinder device according to claim 3, **characterized in that** the piston bears with a low pressure against the spring element in a neutral operating condition.

5. A suspension arrangement for shock, noise and vibration damping suspension of an operator cab (2) on a frame (4) of a working machine, comprising at least three hydraulic cylinder devices according to any of the preceding claims,
**characterized in that**
the hydraulic cylinders (5) are the only load bearing means between the frame (4) of the working machine and the operator cab (2) such that the operator cab during operation is supported, in vertical as well as in horizontal direction, in its entirety only by the hydraulic cylinders by that the respective hydraulic cylinder is fixedly connected to the frame or the operator cab via its cylinder body (6) or piston rod (9), while the other of the cylinder body or the piston rod is at least to some extent articulated connected with the other of the frame or the operator cab.

6. The suspension arrangement according to claim 5, **characterized in that** the hydraulic cylinders are with their cylinder bodies fixedly connected to the frame while the piston rod is at least to some extent articulated connected with the operator cab.

7. A regulating device for a shock, noise and vibration damping suspension arrangement for an operator cab, wherein the suspension arrangement comprises at least three hydraulic cylinder devices according to any of the claims 1-4 which bear the operator cab on a frame of a working machine, **characterized in that** the same comprises an actuator valve for each of the hydraulic cylinders which is able to increase or decrease the hydraulic fluid pressure individually in the first hydraulic fluid chambers of each of the hydraulic cylinders, and that the same also comprises an inclinometer in order to detect the inclination of the vehicle in a direction perpendicular as well as parallel to the longitudinal axis of the vehicle, wherein the regulating device is able to compensate for the inclination of the vehicle by increasing the hydraulic fluid pressure in the first hydraulic fluid chamber of high loaded hydraulic cylinders and decreasing the hydraulic fluid pressure of low loaded hydraulic cylinders in order to maintain each of the hydraulic cylinders in a neutral position.

## Patentansprüche

1. Hydraulikzylindervorrichtung zur Verwendung bei einer Aufhängevorrichtung zur schock-, geräusch- und schwingungsdämpfenden Aufhängung einer Bedienerkabine (2) an einem Rahmen einer Arbeitsmaschine, umfassend einen Hydraulikzylinder (5) mit einem Zylinderkörper (6) mit einem inneren Zylinderraum (7), einen Kolben (8), der im Zylinder verschiebbar beweglich ist, eine Kolbenstange (9), welche in einem inneren Ende mit dem Kolben verbunden ist und sich durch eine Kolbenstangenbohrung (10) in einem Ende des Zylinderkörpers erstreckt und durch diese hin und her verschiebbar ist, wobei der Kolben zwei Hydraulikflüssigkeitskammern mit variablen Volumina und genauer eine erste Hydraulikflüssigkeitskammer (34) auf der Seite des Kolbens, die der Kolbenstange abgewandt ist, sowie eine zweite Hydraulikflüssigkeitskammer (39) auf der Kolbenstangenseite des Kolbens abgrenzt, Hydraulikflüssigkeitsdurchgänge durch den Zylinderkörper zur ersten sowie der zweiten Hydraulikflüssigkeitskammer zum Zuführen von Hydraulikflüssigkeit über Hydraulikleitungen (25, 27) zu und von der entsprechenden Hydraulikflüssigkeitskammer, sowie einen mindestens teilweise mit Gas gefüllten Akkumulator (16), der in Hydraulikflüssigkeitsverbindung mit der ersten Hydraulikflüssigkeitskammer ist,
**dadurch gekennzeichnet, dass** die erste Hydraulikflüssigkeitskammer (34) und der Akkumulator (16) über eine erste Drossel (33) und ein erstes Einwegventil (32) verbunden sind, die parallel zueinander gekoppelt sind und von denen das erste Einwegventil Hydraulikfluss von der ersten Hydraulikflüssigkeitskammer ermöglicht, aber Hydraulikfluss in die entgegengesetzte Richtung blockiert, dass der Kolben (8) zwei Durchflussdurchgänge (35) umfasst, welche die ersten und zweiten Hydraulikflüssigkeitskammern (39) verbinden und von denen ein Durchflussdurchgang eine zweite Drossel (37) ist, während der zweite ein zweites Einwegventil (36) ist, das Hydraulikfluss von der ersten zur zweiten Hydraulikflüssigkeitskammer ermöglicht, aber Hydraulikfluss in die entgegengesetzte Richtung blockiert, und dass der Hydraulikflüssigkeitsdurchgang zu und von der zweiten Hydraulikflüssigkeitskammer eine dritte Drossel (38) umfasst.

2. Hydraulikzylindervorrichtung nach Anspruch 1, **dadurch gekennzeichnet, dass** der Durchflussbereich der ersten Drossel größer ist als der Durchflussbereich der zweiten Drossel, der seinerseits größer ist als der Durchflussbereich der dritten Drossel.

3. Hydraulikzylindervorrichtung nach Anspruch 1 oder 2, **dadurch gekennzeichnet, dass** diese ein Federelement in der zweiten Hydraulikflüssigkeitskammer umfasst.

4. Hydraulikzylindervorrichtung nach Anspruch 3, **dadurch gekennzeichnet, dass** der Kolben in einem neutralen Betriebszustand mit einem niedrigen Druck gegen das Federelement drückt.

5. Aufhängevorrichtung für eine schock-, geräusch- und schwingungsdämpfende Aufhängung einer Bedienerkabine (2) an einem Rahmen (4) einer Arbeitsmaschine, die mindestens drei Hydraulikzylindervorrichtungen nach einem der vorstehenden Ansprüche umfasst,
**dadurch gekennzeichnet, dass**
die Hydraulikzylinder (5) die einzigen Lasttragmittel zwischen dem Rahmen (4) der Arbeitsmaschine und der Bedienerkabine (2) sind, sodass die Bedienerkabine während des Betriebs sowohl in vertikaler als auch horizontaler Richtung in ihrer Gesamtheit nur durch die Hydraulikzylinder getragen wird, dass der entsprechende Hydraulikzylinder mit dem Rahmen oder der Bedienerkabine über seinen Zylinderkörper (6) oder seine Kolbenstange (9) starr verbunden ist, während das andere von dem Zylinderkörper oder der Kolbenstange mindestens in gewissem Grade mit dem anderen von dem Rahmen oder der Bedienerkabine artikuliert verbunden ist.

6. Aufhängevorrichtung nach Anspruch 5, **dadurch gekennzeichnet, dass** die Hydraulikzylinder mit ihren Zylinderkörpern mit dem Rahmen starr verbunden sind, während die Kolbenstange mindestens in gewissem Grade mit der Bedienerkabine artikuliert verbunden ist.

7. Reguliervorrichtung für eine schock-, geräusch- und schwingungsdämpfende Aufhängevorrichtung für eine Bedienerkabine, wobei die Aufhängevorrichtung mindestens drei Hydraulikzylindervorrichtungen nach einem der Ansprüche 1 bis 4 umfasst, welche die Bedienerkabine auf einem Rahmen einer Arbeitsmaschine tragen, **dadurch gekennzeichnet, dass** dieselbe ein Stellventil für jeden von den Hydraulikzylindern umfasst, das fähig ist, den Hydraulikflüssigkeitsdruck in den ersten Hydraulikflüssigkeitskammern von jedem der Hydraulikzylinder individuell zu erhöhen oder verringern, und dass dieselbe auch einen Neigungsmesser umfasst, um die Neigung des Fahrzeugs in einer Richtung senkrecht sowie parallel zur Längsachse des Fahrzeugs zu detektieren, wobei die Reguliervorrichtung fähig ist, die Neigung des Fahrzeugs durch Erhöhen des Hydraulikflüssigkeitsdrucks in der ersten Hydraulikflüssigkeitskammer von hoch belasteten Hydraulikzylindern und Verringern des Hydraulikflüssigkeitsdrucks von niedrig belasteten Hydraulikzylindern zu kompensieren, um jeden von den Hydraulikzylindern in einer Neutralstellung aufrechtzuerhalten.

## Revendications

1. Système de vérin hydraulique à utiliser dans un agencement de suspension pour la suspension amortissant les chocs, les bruits et vibrations d'une cabine d'opérateur (2) sur un châssis d'une machine de travail, comprenant un vérin hydraulique (5) doté d'un corps de vérin (6) comportant un espace intérieur (7), un piston (8) qui est mobile en se déplaçant dans le cylindre, une tige de piston (9) qui est connectée par une extrémité intérieure au piston et s'étend à travers et déplaçable vers et à travers un trou de tige de piston (10) dans une extrémité du corps de vérin, le piston délimitant deux chambres à fluide hydraulique ayant des volumes variables et plus précisément une première chambre à fluide hydraulique (34) sur le côté du piston qui est détourné de la tige de piston, de même qu'une seconde chambre à fluide hydraulique (39) du côté tige de piston du piston, des passages de fluide hydraulique à travers le corps de vérin jusqu'à la première et jusqu'à la seconde chambre à fluide hydraulique pour apporter un fluide hydraulique via des lignes hydrauliques (25, 27) vers et depuis la chambre à fluide hydraulique respective, de même qu'un accumulateur (16) au moins partiellement rempli de gaz qui est en communication de fluide hydraulique avec la première chambre à fluide hydraulique,
**caractérisé en ce que** la première chambre à fluide hydraulique (34) et l'accumulateur (16) sont connectés via un premier étrangleur (33) et une première vanne à sens unique (32) qui sont couplés en parallèle l'un à l'autre et dont la première vanne à sens unique permet un flux hydraulique depuis la première chambre à fluide hydraulique mais bloque le flux hydraulique dans le sens opposé, **en ce que** le piston (8) comprend deux passages de flux (35) qui connectent les première et seconde chambres à fluide hydraulique (39) et dont au moins un passage de flux est un deuxième étrangleur (37) alors que le second est une seconde zone à sens unique (36) qui permet un flux hydraulique depuis les première et seconde chambres à fluide hydraulique mais bloque le flux hydraulique dans le sens opposé, et **en ce que** le passage à fluide hydraulique vers et depuis la seconde chambre à fluide hydraulique comprend un troisième étrangleur (38).

2. Dispositif de vérin hydraulique selon la revendication 1, **caractérisé en ce que** la zone d'écoulement de flux du premier étrangleur est plus grande que la zone d'écoulement de flux du deuxième étrangleur qui est à son tour plus grande que la zone d'écoulement de flux du troisième étrangleur.

3. Dispositif de vérin hydraulique selon la revendication 1 ou 2, **caractérisé en ce que** celui-ci comprend un élément à ressort dans la seconde chambre à fluide hydraulique.

4. Dispositif de vérin hydraulique selon la revendication 3, **caractérisé en ce que** le piston s'appuie à basse pression contre l'élément à ressort en situation de fonctionnement neutre.

5. Agencement de suspension pour suspension amortissant les chocs, les bruits et les vibrations d'une cabine d'opérateur (2) sur un châssis (4) de machine de travail, comprenant au moins trois dispositifs de vérins hydrauliques selon l'une quelconque des revendications précédentes,
**caractérisé en ce que**
les vérins hydrauliques (5) sont le seul moyen de portage de charges entre le châssis (4) de la machine de travail et la cabine d'opérateur (2), de sorte que la cabine d'opérateur, en cours de fonctionnement, est supportée, dans le sens vertical aussi bien qu'horizontal, dans son intégralité seulement par les vérins hydrauliques par le fait que le vérin hydraulique respectif est connecté fixement au châssis ou à la cabine de l'opérateur via son corps de cylindre (6) ou sa tige de piston (9), alors que l'autre parmi le corps de cylindre ou la tige de piston est au moins dans une certaine mesure connecté de manière articulée à l'autre parmi le châssis ou la cabine d'opérateur.

6. Agencement de suspension selon la revendication 5, **caractérisée en ce que** les vérins hydrauliques sont connectés fixement par leur corps de vérin au châssis alors que la tige de piston et au moins dans une certaine mesure connectée de manière articulée à la cabine d'opérateur.

7. Dispositif de régulation pour agencement de suspension amortissant les chocs, les bruits et les vibrations pour une cabine d'opérateur, dans lequel l'agencement de suspension comprend au moins trois dispositifs de vérins hydrauliques selon l'une quelconque des revendications 1 à 4 qui supportent la cabine d'opérateur sur un châssis d'une machine de travail,
**caractérisé en ce que** celui-ci comprend pour chacun des vérins hydrauliques une vanne d'actionnement qui est apte à augmenter ou à diminuer la pression du fluide hydraulique individuellement dans les premières chambres à fluide hydraulique de chacun des vérins hydrauliques, et **en ce que** le châssis comprend aussi un inclinomètre afin de détecter l'inclinaison du véhicule dans un sens perpendiculaire de même que parallèle à l'axe longitudinal du véhicule, le dispositif de régulation étant apte à compenser l'inclinaison du véhicule en augmentant la pression de fluide hydraulique dans la première chambre à fluide hydraulique de vérins hydrauliques fortement chargés et à diminuer la pression de fluide hydraulique de vérins hydrauliques faiblement chargés afin de maintenir chacun des vérins hydrauliques dans une position neutre.
